Europäisches Patentamt

European Patent Office

Office européen des brevets

(19)

(11) Numéro de publication: **0 122 195**
**B1**

(12) **FASCICULE DE BREVET EUROPEEN**

(45) Date de publication du fascicule du brevet:
27.08.86

(21) Numéro de dépôt: 84400671.8

(22) Date de dépôt: 05.04.84

(51) Int. Cl.⁴: **F 16 D 65/16,** F 16 D 65/74,
F 16 D 65/54, F 16 D 55/10,
F 16 D 55/22, B 60 T 13/58

(54) **Dispositif de freinage hydro-pneumatique.**

(30) Priorité: 08.04.83 ES 521783

(43) Date de publication de la demande:
17.10.84 Bulletin 84/42

(45) Mention de la délivrance du brevet:
27.08.86 Bulletin 86/35

(84) Etats contractants désignés:
DE FR GB IT

(56) Documents cités:
DE - B - 1 655 888
FR - A - 650 826
FR - A - 2 410 584
US - A - 1 642 784
US - A - 2 174 635
US - A - 2 953 412
US - A - 3 675 742
US - A - 3 837 443
US - A - 3 851 567
US - A - 3 913 328

(73) Titulaire: **BENDIX ESPANA S.A., Balmes 243,
Barcelona 6 (ES)**

(72) Inventeur: **Folch, Carlos Montornes, Avda.
Pomar 8, 3o, 2a, Badalona Barcelona (ES)**

(74) Mandataire: **Le Moenner, Gabriel et al, SERVICE
BREVETS BENDIX 44, Rue François 1er, F-75008 Paris
(FR)**

ACTORUM AG

**Description**

La présente invention concerne les dispositifs de freinage, notamment pour véhicule, et plus particulièrement les dispositifs de freinage hydro-pneumatiques du type comprenant: au moins un élément de friction disposé au voisinage d'un organe mobile à freiner; un dispositif d'actionnement hydraulique relié à l'élément de friction et actionnable par un liquide sous pression pour déplacer l'élément de friction et l'amener en contact de friction avec l'organe à freiner; un moyen de moteur pneumatique comprenant une chambre hydraulique, reliée au dispositif d'actionnement hydraulique, et une chambre pneumatique, susceptible d'être reliée à une source de gaz sous pression, les deux chambres étant séparées par une structure mobile formant piston, dans un agencement tel que l'admission de gaz sous pression dans la chambre pneumatique provoque une élévation de pression du liquide contenu dans la chambre hydraulique pour la mise en oeuvre du dispositif d'actionnement hydraulique.

Les dispositifs de freinage des véhicules, plus particulièrement des véhicules automobiles, utilisent largement des circuits essentiellement hydrauliques pour actionner des moteurs de frein, également hydrauliques, généralement du type à piston coulissant, disposés dans les freins des roues, qu'ils soient des types à disque ou à tambour.

Un certain nombre de véhicules, notamment les véhicules utilitaires, routiers ou se déplaçant sur rail, exploitent comme source de pression de l'air comprimé. On prévoit donc, entre le circuit pneumatique et les freins, soit des cylindres purement pneumatiques, tels que les cylindres à ressort, actionnant les freins, plus particulièrement à tambour, par un embiellage mécanique à came ou à coin, soit des portions de circuit hydraulique alimentant des moteurs hydrauliques de frein analogues à ceux évoqués ci-dessus. L'interface entre le circuit pneumatique et le circuit hydraulique s'effectue alors avec un vérin pneumatique actionnant un piston d'un maître-cylindre, pourvu de son réservoir de liquide de freinage, comme le montre le document US-A-2 953 412, le contrôle du freinage, modulé par servo-valve, s'opérant en amont, comme le décrit également ce document, ou en aval, comme le décrit le document FR-A-2 410 584.

Ce type d'interface circuit pneumatique/circuit hydraulique pose des problèmes au niveau des joints coulissants du piston de maître-cylindre, générateurs de risques de fuites, et impose la présence de réservoirs de réalimentation des maître-cylindres obérant notablement les coûts de production et d'installation.

La présente invention a pour objet de proposer un dispositif de freinage du type défini plus haut, obviant aux inconvénients des dispositifs connus, de fonctionnement fiable et efficace, autorisant une certaine polyvalence d'utilisations et une grande souplesse d'adaptation.

Pour ce faire, selon une caractéristique de l'invention, la chambre hydraulique du moyen de moteur pneumatique est au moins partiellement délimitée périphériquement par un soufflet élastique aménagé au voisinage immédiat du dispositif d'actionnement hydraulique, la structure de paroi mobile coopérant avec le soufflet.

L'utilisation de chambres à parois expansibles, et notamment de soufflets métalliques, dans les dispositifs d'actionnement hydrauliques de freins, a déjà été envisagée, notamment dans les documents US-A-1 642 784 (freins à tambour), US-A-2 174 635 ou US-A-3 851 567 (freins à disque), mais dans le cadre de systèmes de freinage purement hydrauliques. Le document US-A-1 642 784 envisage, dans ce cadre, un système fermé utilisant en outre un émetteur à soufflet, ce dernier étant toutefois actionné manuellement, à l'encontre d'un ressort de rappel, par le conducteur et étant disposé à distance des dispositifs d'actionnement en étant séparé de ces derniers par des canalisations de longueur importante, ce qui interdit de fait, en raison de la compressibilité de l'air, l'utilisation d'autres fluides d'actionnement que les liquides, contrairement à la généralisation envisagée dans le préambule de ce document.

Contrairement à cet état de la technique, la présente invention propose un système combiné moteur de frein hydraulique/interface pneumatique-hydraulique de structure simple et d'utilisation fiable, mettant en oeuvre un volume restreint de fluide hydraulique, offrant un temps de réponse rapide, mettant en oeuvre un nombre réduit d'éléments et adaptable à tout type de freins de véhicule, et notamment de véhicules utilitaires lourds ou légers.

Dans cet esprit, selon une autre caractéristique plus particulière de l'invention, le dispositif d'actionnement hydraulique comprend également au moins une chambre définie par une enveloppe expansible élastique, avantageusement un soufflet métallique, reliée à la chambre hydraulique amont du moyen de moteur pneumatique.

D'autres caractéristiques et avantages de la présente invention ressortiront de la description suivante de modes de réalisation, donnés à titre illustratif mais nullement limitatif, faite en relation avec les dessins annexés, sur lesquels:

la Fig. 1 représente un premier mode de réalisation d'un dispositif de freinage hydro-pneumatique selon l'invention appliqué à un frein à disque à garniture partielle;

la Fig. 2 représente, à plus grande échelle, un autre mode de réalisation de dispositif de freinage hydro-pneumatique de l'invention, également pour un frein à disque à garniture partielle;

la Fig. 3 représente un autre mode de réalisation du dispositif de l'invention appliqué à un frein à disque annulaire;

la Fig. 4 représente une variante du moteur pneumatique montrant un mode de réalisation d'un système de purge et de remplissage du circuit hydraulique; et

la Fig. 5 représente un mode de réalisation simplifié du moteur pneumatique.

Dans la description qui va suivre et sur les dessins, les éléments identiques ou analogues portent les mêmes chiffres de référence, éventuellement indicés.

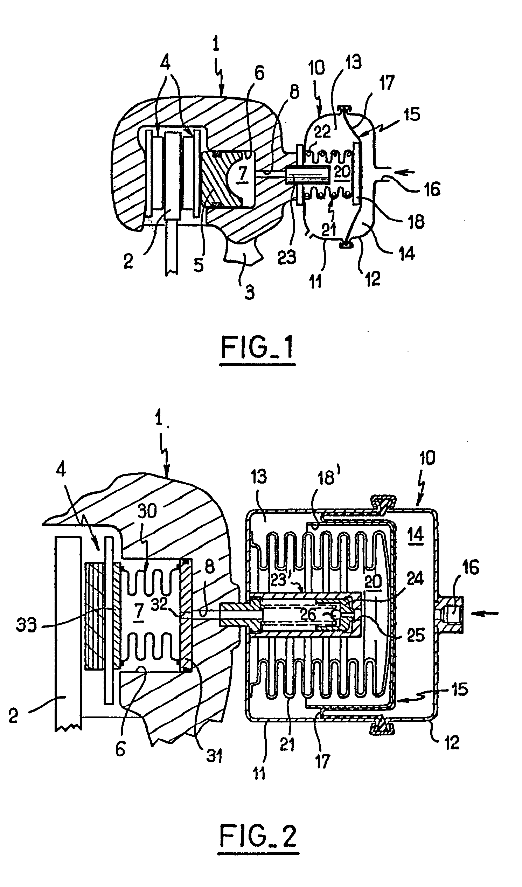

On a représenté sur la Fig. 1 un frein à disque à garniture partielle du type comportant un étrier 1 chevauchant le disque à freiner 2 et coulissant par rapport à un support fixe de frein 3. De façon classique, de part et d'autre du disque 2, sont disposés des éléments de friction ou plaquettes de frein 4 actionnés, dans l'example représenté, par un piston 5 de moteur de frein coulissant dans un alésage 6 d'une chambre d'actionnement hydraulique 7 formée dans l'étrier 1. Conformément à l'invention, sur l'étrier 1 est monté un moyen de moteur pneumatique 10 comprenant une enveloppe constituée par l'assemblage de deux coquilles 11 et 12 définissant une cavité interne divisée en deux chambres 13 et 14 séparées par une structure mobile formant piston 15. La coquille 14, opposée à l'étrier 1, comporte un embout 16 de raccordement à une source de gaz sous pression modulable (non représentée) d'un véhicule automobile. Dans la chambre 13 adjacente à l'étrier 1, est mélangée une chambre hydraulique 20 délimitée au moins partiellement par une enveloppe souple 21 et communiquant avec la chambre hydraulique 7 de l'étrier 1 par un passage 8 formé dans ce dernier. Dans le mode de réalisation de la Fig. 1, l'enveloppe souple 21 est constituée d'un soufflet tubulaire en matériau élastomère fermé à une de ses extrémités frontales et solidarisé, par son extrémité ouverte, à la face de la coquille 11 montée sur l'étrier 1, l'enveloppe 21 étant rendue élastique par un ressort 22 disposé dans les convolutions du soufflet. La structure mobile formant piston est constituée d'un diaphragme élastique 17, bridé par sa périphérie entre les extrémités coopérantes d'assemblage des coquilles 11 et 12, et d'une paroi centrale rigide 18 portant contre l'extrémité frontale fermée du soufflet 21.

Dans un tel agencement, les chambres hydrauliques 7 et 20 et leur passage d'intercommunication 8 sont remplis d'un liquide hydraulique d'actionnement occupant ainsi un volume restreint. Dans la position de repos représentée sur la Fig. 1, dans laquelle aucun gaz sous pression n'est admis dans la chambre pneumatique d'entrée 14 du moteur 10, cette chambre pneumatique 14 occupe un volume minimum, le soufflet 21 étant en configuration relativement détendue, la pression du liquide d'actionnement dans les chambres 7 et 20 étant réduite. Lorsque du gaz sous pression est admis dans la chambre pneumatique 14, la chambre 13 étant, par example, à l'atmosphère, la structure de piston 15 est déplacée vers la gauche, sur la Fig. 1, dans la direction tendant à comprimer le soufflet 21, créant ainsi une surpression correspondante du liquide dans les chambres 20 et 7 avec transfert d'une quantité limitée de ce dernier de la chambre 20 vers la chambre d'actionnement 7 pour actionner le piston 5 et freiner le disque 2. Lors de la cessation de l'admission du gaz sous pression dans la chambre pneumatique 14, le soufflet 21 se détend pour recouvrer la configuration représentée sur la Fig. 1. Pour éviter un effet de succion éventuel dans la chambre hydraulique d'actionnement 7 et permettre un rattrapage automatique de l'usure des éléments de friction 4, on prévoit avantageusement, dans le passage 8 entre les chambres 7 et 20 un dispositif à clapet anti-retour 23.

Le mode de réalisation de la Fig. 2 est, dans ses grandes lignes, analogue à celui de la Fig. 1 et s'en distingue par les points suivants. Le moteur hydraulique de frein, intégré dans l'étrier 1, comporte ici une chambre hydraulique 7 délimitée par un soufflet métallique élastique 30 reçu dans l'alésage 6 de l'étrier 1, les extrémités frontales du soufflet 30 étant solidarisées, d'une part à une plaque d'appui 31 montée dans le fond de l'alésage 6 et pourvue d'un orifice central 32 communiquant avec le passage 8 dans l'étrier 1, et d'autre part à une plaque d'actionnement 33 portant contre la plaque support de l'élément de friction adjacent 4, éventuellement solidarisé à cette dernière. De façon similaire, la chambre hydraulique 20 du moyen de moteur pneumatique 10 est constituée, cette fois, par un soufflet métallique élastique 21, réalisé par example en acier ou en acier inoxydable. Dans ce mode de réalisation, la structure mobile formant piston 15 comporte une membrane roulante 17, également fixée par sa périphérie entre les coquilles 11 et 12, et une paroi de piston rigide tubulaire 18' dont le fond porte contre le soufflet 21 et dont la partie de virole périphérique entoure partiellement le soufflet en formant surface d'appui pour la membrane roulante 17. L'élasticité en retour du soufflet 21 (et du moyen de piston à diaphragme 15) est ici assuré par l'élasticité propre du métal des soufflets 21 et 30. Le fonctionnement est identique à celui décrit précédemment en relation avec le mode de réalisation de la Fig. 1, si ce n'est que, pour corriger, en fonctionnement, la tendance excessive au retrait vers sa position de repos du soufflet d'actionnement 30 intégré dans l'étrier 1, et assurer ainsi un rattrapage automatique de jeu, le dispositif anti-retour à clapet 23' est du type décrit dans la demande de brevet déposée ce même jour par la demanderesse (SP N° 521 784), dont le contenu est supposé intégré ici pour référence, et comportant essentiellement, dans un boîtier cylindrique intégré dans le soufflet métallique 21, un piston 24 sollicité par un ressort dans la direction tendant à obturer un orifice d'entrée 25 communiquant avec la chambre hydraulique 20 du moyen de moteur pneumatique 10 et pourvu d'un passage axial traversant sélectivement obturé par une bille 26 sollicitée par le ressort de rappel du piston pour tendre à obturer ce passage traversant.

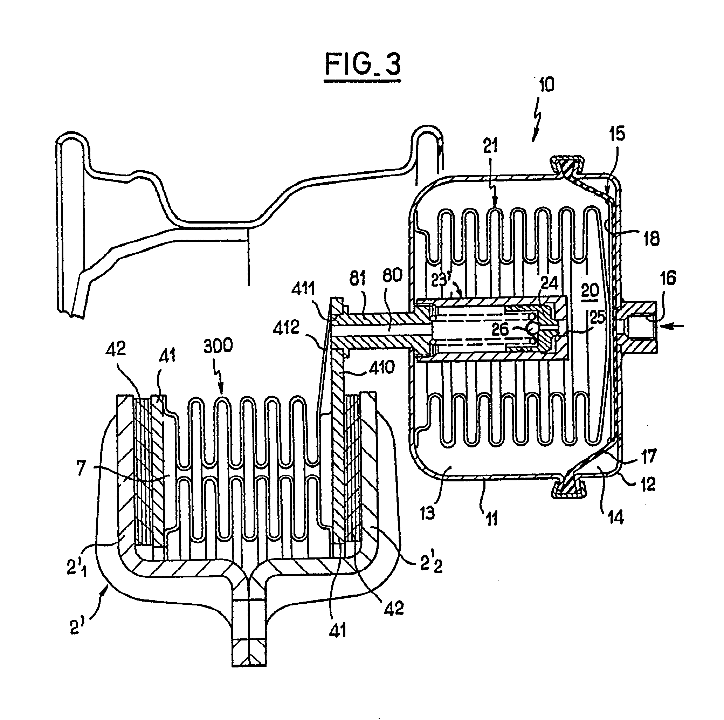

On a représenté sur la Fig. 3 un agencement dérivé de celui de la Fig. 2 et appliqué à un frein annulaire du type à écartement. La structure de disque 2' présente ici une extrémité en forme de fourche formant deux faces annulaires en regard $2'_1$ et $2'_2$ entre lesquelles est disposé un dispositif d'actionnement hydraulique annulaire constitué d'un soufflet métallique élastique annulaire 300, définissant la chambre hydraulique d'actionnement 7, également annulaire, dont les extrémités sont solidarisées respectivement aux plaques supports annulaires 41 des garnitures de friction annulaires 42 sollicitées contre les faces en regard de la structure de disque 2' lorsque la pression du liquide d'actionnement hydraulique 7 augmente sous l'effet de l'admission d'un gaz sous pression dans la chambre pneumatique d'entrée 14 du moyen de moteur pneumatique 10, par ailleurs identique à celui décrit en relation avec le mode de réalisation de la Fig. 2, si ce n'est que son moyen de piston à diaphragme 15 est analogue à celui décrit en relation avec le mode de réalisation de la Fig. 1. Dans le mode de réalisation représenté, le moyen de moteur pneumatique 10 est monté sur une extension radiale vers l'extérieur 410 de la plaque support 41 de l'élément de friction intérieur de la roue au moyen d'un embout de montage 81 reçu dans un orifice correspondant 411 de l'extension radiale 410 et pourvu d'un passage central 80 établissant la communication permanente entre la chambre intérieure du dispositif anti-retour à clapet 23' — et donc, sélectivement, avec la chambre hydraulique 20 du moyen de moteur pneumatique 10 — et un passage d'entrée à la chambre hydraulique 7 constitué par une extension 412 de l'extrémité intérieure du soufflet 300 venant recouvrir l'orifice 411 de la plaque support intérieure 41. Les plaques supports 41 sont avantageusement solidarisées par soudage aux extrémités frontales du soufflet 300 et sont pourvues de garniture de friction 42 à haute résistance, comme également décrit dans la demande de brevet sus-mentionnée de ce même jour au nom de la demanderesse.

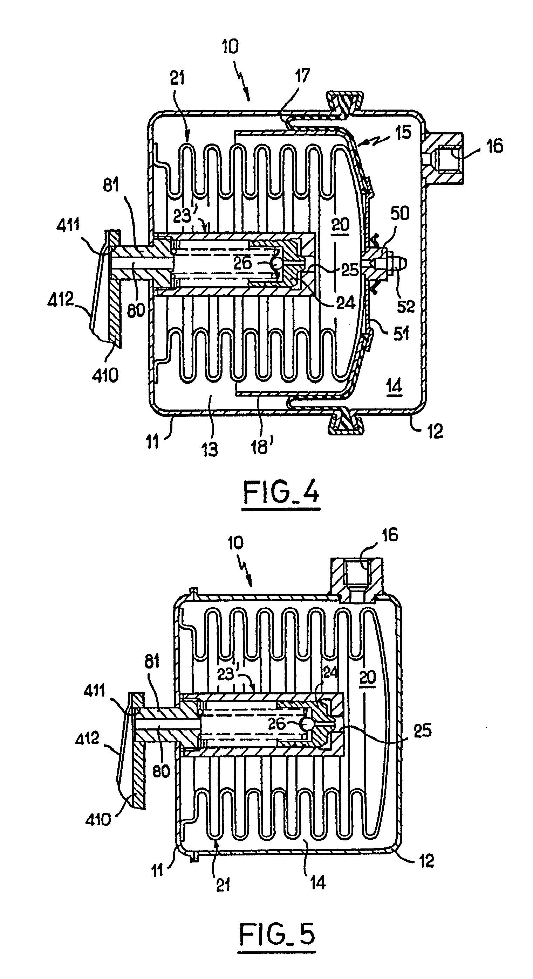

On a représenté sur la Fig. 4 un moteur pneumatique 10 du type de celui représenté sur la Fig. 2, associé, conformément au mode de la réalisation de la Fig. 3, à un frein annulaire et pourvu d'un embout 50 fixé de façon étanche à la paroi frontale d'extrémité du soufflet métallique 21 et monté sur une plaque annulaire 51 de la structure de piston 15, la membrane roulante 17 et la paroi de piston rigide tubulaire 18' étant ici annulaires et solidarisées à la périphérie de la plaque 51. L'embout 50, servant au remplissage et/ou à la purge du circuit hydraulique constitué par les chambres 7 et 20, est obturé hermétiquement par une vis 52. Dans ce mode de réalisation (applicable à ceux des Fig. 1 à 3), le remplissage et/ou la purge s'effectuent avant mise en place de la coquille extérieure 12 sur la coquille porteuse 11. On peut prévoir un système de purge et de remplissage analogue dans l'embout de montage 81, entre la coquille avant 11 et l'extension radiale 410 de la plaque support de garniture annulaire 41.

Le mode de réalisation à diaphragme de la Fig. 3 convient lorsque les surfaces utiles et les pressions d'actionnement autorisent une course courte du moteur pneumatique, le mode de réalisation à membrane roulante de la Fig. 2 convenant au contraire pour des conditions nécessitant une course longue du moteur pneumatique. Si la localisation in situ du moteur pneumatique 10 ne pose pas de problèmes particuliers de dimensionnement, on peut alors réaliser le moteur pneumatique comme représenté sur la Fig. 5, sans moyen de piston à diaphragme, l'interface de séparation et d'actionnement entre le gaz de commande et le liquide de frein étant seul assuré par le soufflet métallique élastique 21, offrant une surface de piston limitée correspondant à la couronne entre les plis intérieurs des convolutions et la périphérie du boîtier du dispositif anti-retour à clapet 23'. La paroi frontale du soufflet 21 peut également être pourvue d'un système de purge tel que décrit en relation avec la Fig. 4.

Quoique la présente invention ait été décrite en relation avec des modes de réalisation particuliers, elle ne s'en trouve pas limitée mais est au contraire susceptible de modifications et de variantes qui apparaîtront à l'homme de l'art.

## Revendications

1. Dispositif de freinage hydro-pneumatique, comprenant:
— au moins un élément de friction (4; 41, 42) disposé au voisinage d'un organe mobile à freiner (2; 2');
— un dispositif d'actionnement hydraulique (5; 30; 300), associé à l'élément de friction et actionnable par un liquide sous pression pour déplacer l'élément de friction et l'amener en contact de friction avec l'organe à freiner; et
— un moyen de moteur pneumatique (10), comprenant une chambre hydraulique (20), reliée au dispositif d'actionnement hydraulique (5; 30; 300), et une chambre pneumatique (14) susceptible d'être reliée à une source de gaz sous pression, les deux chambres étant séparées par une structure de paroi mobile formant piston, caractérisé en ce que la chambre hydraulique (20) du moyen de moteur pneumatique est au moins partiellement délimitée périphériquement par un soufflet élastique (21) aménagé au voisinage immédiat du dispositif d'actionnement hydraulique (5; 30; 300), la structure de paroi mobile (15) coopérant avec le soufflet (21).

2. Dispositif selon la revendication 1, caractérisé en ce que la chambre hydraulique est délimitée par un soufflet métallique (21).

3. Dispositif selon la revendication 1 ou la revendication 2, caractérisé en ce que le moyen de moteur pneumatique (10) comprend un moyen de piston (15) à diaphragme (17) portant centralement contre l'extrémité adjacente du soufflet (21).

4. Dispositif selon la revendication 3, caractérisé en ce que le moyen de moteur pneumatique (10) comprend un boîtier (11, 12), le moyen de piston à diaphragme (15) comprenant une membrane roulante (17), fixée par sa périphérie au boîtier, et une paroi de piston rigide (18') portant contre le soufflet (21).

5. Dispositif selon l'une des revendications 1 à 4, caractérisé en ce qu'il comprend, entre le dispositif d'actionnement hydraulique (5; 30; 300) et la chambre hydraulique (20) du moyen de moteur pneumatique (10), un dispositif transmetteur de pression à clapet anti-retour (23; 23').

6. Dispositif selon la revendication 5, caractérisé en ce que le dispositif d'actionnement hydraulique comprend au moins une chambre (7) définie par une enveloppe expansible élastique (30; 300) et reliée à la chambre hydraulique (20) du moyen de moteur pneumatique (10).

7. Dispositif selon la revendication 6, caractérisé en ce que l'enveloppe expansible élastique est formée par un soufflet (30; 300).

8. Dispositif selon la revendication 7, caractérisé en ce que l'enveloppe expansible est constituée par un soufflet métallique (30; 300).

9. Dispositif selon la revendication 8, caractérisé en ce que le soufflet métallique (30; 300) comporte une paroi d'extrémité plane (33; 41) coopérant avec l'élément de friction adjacent (4; 42).

**Patentansprüche**

1. Hydropneumatische Bremsvorrichtung mit mindestens einem Reibglied (4; 41, 42), das benachbart zu einem abzubremsenden beweglichen Bauteil (2; 2') angeordnet ist, einer hydraulischen Betätigungsvorrichtung (5; 30; 300), die dem Reibglied zugeordnet und durch ein Druckmittel betätigbar ist, um das Reibglied zu verschieben und mit dem abzubremsenden Bauteil in Reibanlage zu bringen, und einem pneumatischen Motor (10) mit einer an der hydraulischen Betätigungsvorrichtung (5; 30; 300) angeschlossenen hydraulischen Kammer (20) und einer pneumatischen Kammer (14), die an einer Druckgasquelle anschliessbar ist, wobei die beiden Kammern durch eine einen Kolben bildende bewegliche Wandanordnung getrennt sind, dadurch gekennzeichnet, dass die hydraulische Kammer (20) des pneumatischen Motors zumindest teilweise am Umfang von einem elastischen Balg (21) begrenzt wird, der in unmittelbarer Nachbarschaft der hydraulischen Betätigungsvorrichtung (5; 30; 300) vorgesehen ist, wobei die bewegliche Wandanordnung (15) mit dem Balg (21) zusammenwirkt.

2. Vorrichtung nach Anspruch 1, dadurch gekennzeichnet, dass die hydraulische Kammer von einem metallischen Balg (21) begrenzt wird.

3. Vorrichtung nach Anspruch 1 oder 2, dadurch gekennzeichnet, dass der pneumatische Motor (10) eine Membran-(17)-Kolben (15)-Einrichtung aufweist, die zentral am angrenzenden Ende des Balges (21) anliegt.

4. Vorrichtung nach Anspruch 3, dadurch gekennzeichnet, dass der pneumatische Motor (10) ein Gehäuse (11, 12) aufweist, wobei die Membran-Kolben-Einrichtung (15) eine Rollmembran (17), die mit ihrem Umfang am Gehäuse befestigt ist, und eine am Balg (21) anliegende starre Kolbenwand (18') aufweist.

5. Vorrichtung nach einem der Ansprüche 1-4, dadurch gekennzeichnet, dass zwischen der hydraulischen Betätigungsvorrichtung (5; 30; 300) und der hydraulischen Kammer (20) des pneumatischen Motors (10) eine Druckübertragungsvorrichtung mit Rückschlagventil (23; 23') vorgesehen ist.

6. Vorrichtung nach Anspruch 5, dadurch gekennzeichnet, dass die hydraulische Betätigungsvorrichtung mindestens eine Kammer (7) aufweist, die von einer elastischen expandierbaren Umhüllung (30; 300) gebildet wird und mit der hydraulischen Kammer (20) des pneumatischen Motors (10) verbunden ist.

7. Vorrichtung nach Anspruch 6, dadurch gekennzeichnet, dass die elastische expandierbare Umhüllung von einem Balg (30; 300) gebildet wird.

8. Vorrichtung nach Anspruch 7, dadurch gekennzeichnet, dass die expandierbare Umhüllung von einem metallischen Balg (30; 300) gebildet wird.

9. Vorrichtung nach Anspruch 8, dadurch gekennzeichnet, dass der metallischen Balg (30; 300) eine ebene Endwand (33; 41) aufweist, die mit dem angrenzenden Reibglied (4; 42) zusammenwirkt.

**Claims**

1. A hydropneumatic brake device comprising at least one friction member (4; 41, 42) disposed adjacent a movable member to be braked (2; 2'), a hydraulic actuating device (5; 30; 300) associated with the friction member and adapted to be actuated by a pressure fluid to displace the friction element for moving it into frictional engagement with the member to be braked, and pneumatic motor means (10) comprising a hydraulic chamber (20) connected to the hydraulic actuating device (5; 30; 300) and a pneumatic chamber (14) adapted to be connected to a pressure gas source, the two chambers being separated by a movable wall structure forming a piston, characterized in that the hydraulic chamber (20) of the pneumatic motor means is at least partially delimited at its periphery by a resilient bellows (21) provided immediately adjacent to the hydraulic actuating device (5; 30; 300), the movable wall structure (15) cooperating with the bellows (21).

2. Device according to claim 1, characterized in that the hydraulic chamber is delimited by a metallic bellows (21).

3. Device according to claim 1 or claim 2, characterized in that the pneumatic motor means (10) comprises diaphragm(17)piston(15) means centrally engaging the adjacent end of the bellows (21).

4. Device according to claim 3, characterized in that the pneumatic motor means (10) comprises a casing (11, 12), the diaphragm-piston means (15) comprising a rolling diaphragm (17) fixed at its periphery to the casing, and a rigid piston wall (18') engaging the bellows (21).

5. Device according to any of claims 1 to 4, characterized in that it comprises, between the hydraulic actuating device (5; 30; 300) and the hydraulic chamber (20) of the pneumatic motor means (10), a pressure transmitting device (23; 23') including a check valve.

6. Device according to claim 5, characterized in that the hydraulic actuating device comprises at least one chamber (7) defined by a resilient expansible envelope (30; 300) and connected to the hydraulic chamber (20) of the pneumatic motor means (10).

7. Device according to claim 6, characterized in that the resilient expansible envelope is formed by a bellows (30; 300).

8. Device according to claim 7, characterized in that the expansible envelope is comprised of a metallic bellows (30; 300).

9. Device according to claim 8, characterized in that the metallic bellows (30; 300) comprises a plain end wall (33; 41) cooperating with the adjacent friction member (4; 42).

FIG_1

FIG_2

# FIG_3

FIG_4

FIG_5